# EUROPEAN PATENT APPLICATION

(11) **EP 1 995 726 A1**
(43) Date of publication of application: **26.11.2008**
(21) Application number: 07707591.9
(22) Date of filing: 29.01.2007
(51) Int. Cl.: G11B 17/051

(54) **DISC PLAYER**

(30) Priority: 16.03.2006 JP 2006072221
(71) Applicant: CLARION Co., Ltd., Bunkyo-ku, Tokyo 112-8608 (JP)
(72) Inventor: SATO, Katsuhisa, Tokyo 112-8608 (JP)
(74) Representative: Glawe, Delfs, Moll
(86) International application number: PCT/JP2007/051360
(87) International publication number: WO 2007/108230

(57) **Abstract**

There is provided a disc player which does not require any complicatedmechanism for holding discs different in diameter at the terminal portion of the loading passage and implements thin design of the apparatus.

Guide mechanism 81A, 82A for guiding a disc 200 inserted in an insertion port upwardly or downwardly inside the main body are provided, and the disc 200 guided upwardly or downwardly can be loaded along a different loading passage RK1 inside the main body 1.

## Description

### Technical Field

The present invention relates to a disc player that is mounted in a vehicle and reproduces information in a recording medium disc such as CD (compact disc), DVD (digital versatile disc) or the like.

In conventional disc players such as CD, DVD players, etc. which are mounted in vehicles, a disc which is different in size, for example, an 8-cm disc, a 12-cm disc or the like is pulled in from an insertion port, and the disc pulled into the main body is clamped onto a turntable and chucked to reproduce the disc (for example, see Patent Document 1).
Patent Document 1: WO/2001/091119

### Disclosure of the Invention

### Problem to be solved by the Invention

In the conventional construction, for example when an 8 cm disc is inserted and when a 12 cm disc is inserted, a mechanism for loading these discs along the same loading passage formed inside the main body is adopted. Therefore, a complicated mechanism that can hold discs different in diameter is required to be provided at the terminal portion of the loading passage, and this induces a problem that the apparatus is large in scale and particularly the dimension in the thickness direction of the apparatus is increased.
Furthermore, various discs which are identical in shape, but different in material, etc. have been recently proposed. When these discs are loaded along the same loading passage, there is a risk that some kinds of discs may be scratched or the like.

Therefore, an object of the present invention is to solve the above problem of the conventional technique, and provide a disc player that does not require any complicated mechanism for holding discs different in diameter at the terminal portion of the loading passage, and implement the thin design of the apparatus. Furthermore, the present invention has an object to provide a disc player in which various discs are not scratched, etc. even when these discs are different in material, etc.

### Means of solving the Problem

According to the present invention, a disc player for loading a disc inserted in an insertion port into a main body to reproduce the disc is characterized in that a guide mechanism for guiding the disc inserted in the insertion port upwardly or downwardly inside the main body is provided, and the upwardly or downwardly guided disc can be loaded along different loading passages inside the main body.

In this construction, the disc inserted into the insertion port is guided upwardly or downwardly through the guide mechanism, and the upwardly and downwardly guide discs are loaded along the different loading passages inside the main body.
Accordingly, a complicated mechanism that can hold discs different in diameter is not required to be provided at the terminal portion of the loading passage. This makes it possible to miniaturize the apparatus by just that much, and particularly to reduce the dimension in the thickness direction of the apparatus. Furthermore, when it is made possible to load various kinds of discs different inmaterial or the like, by individually improving each of the loading passages, a disc player in which these discs are not scratched, etc. can be provided.

In this case, a disc contact portion may be individually provided to each terminal portion of the loading passages. The disc contact portion may be formed of a plate member, and both the edge portions of the plate member may face each terminal portion of the loading passages.
The guide mechanism may be equipped with a guide bar that extends in the lateral direction of the insertion port and is varied in height in the lateral direction. The height of the guide barmaybe gradually increased toward the end of the insertion port. The guide bar may be formed integrally with the inner surface of a chassis of the main body. The disc may be loaded while pinched by a loading roller and the guide bar.

The insertion port of the main body may be provided with a guide member in which discs different in diameter are freely insertable and which comes into contact with the outer periphery of an inserted large-diameter disc. The guide member stably loads the disc while guiding the outer periphery of the disc. A backwardly declined taper face may be formed on the lower surface of a free end of the guide member. In this case, when a large-diameter disc is inserted, the tip of the disc is downwardly oriented along the tapered face, and intersects to one pawl portion of a trigger plate. When the disc reaches the terminal portion of the loading passage, the disc comes into contact with the disc contact portion, pushes the other pawl portion of the trigger plate and executes a clamp operation of the disc concerned with the pushing of the other pawl portion as a trigger.

### Effect of the Invention

In this invention, the discs inserted into the insertion port are guided upwardly or downwardly, and the upwardly or downwardly guided discs are loaded along the different loading passages inside the main body. Therefore, it is unnecessary that a complicated mechanism that can hold discs different in diameter is provided at the terminal portion of the loading passage like the prior art, so that the apparatus can be miniaturized and particularly the dimension in the thickness direction of the apparatus can be reduced.

### Brief Description of the Drawings

[Fig. 1] is a perspective view showing an embodiment of a disc player according to the present invention.
[Fig. 2] is a perspective view showing the disc player when an upper chassis is removed.
[Fig. 3] is a perspective view of a lower chassis.
[Fig. 4] is a left-hand perspective view when a drive unit is secured to the lower chassis.
[Fig. 5] is a right-hand perspective view when the drive unit is secured to the lower chassis.
[Fig. 6] is a perspective view showing a pair of gate members.

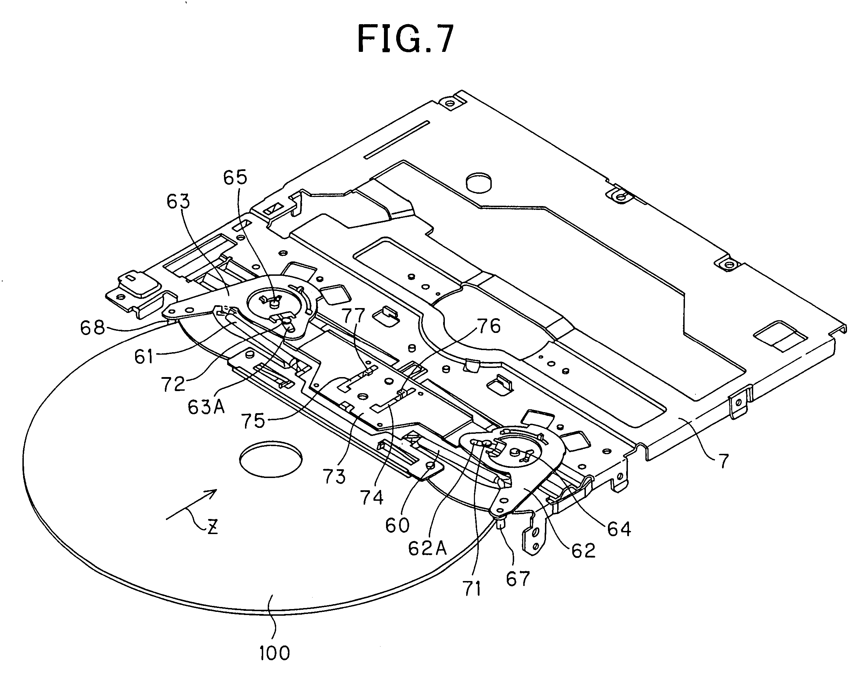

[Fig. 7] is a perspective view showing a state that a pair of gate members are opened by a 12cm disc.
[Fig. 8] is a perspective view showing a state that the pair of gate members are opened by an 8cm disc.
[Fig. 9] A is a perspective view of the upper chassis when viewed from the back side, and B is a diagram showing an elongated hole.
[Fig. 10] is a cross-sectional view when the 8cm disc is inserted.
[Fig. 11] is a perspective view of the same state as shown Fig. 10.
[Fig. 12] is a cross-sectional view when a 12cm disc is inserted.
[Fig. 13] is a perspective view of the same state as shown in Fig. 12 .

### Description of Reference Numerals

- 1: main body
- 3: chassis
- 5: lower chassis
- 7: upper chassis
- 23: insertion port
- 59: gate member
- 62,63: turn plate
- 64,65: pin (support member)
- 67, 38: gate pin
- 73: joint plate
- 74, 75: guide hole
- 76, 77: guide portion
- 81, 82: guide bar
- 83, 84: disc contact portion
- 100, 200: disc
- RK1, RK2: loading passage

### Best Modes for carrying out the Invention

An embodiment of the present invention will be described hereunder with reference to the drawings.

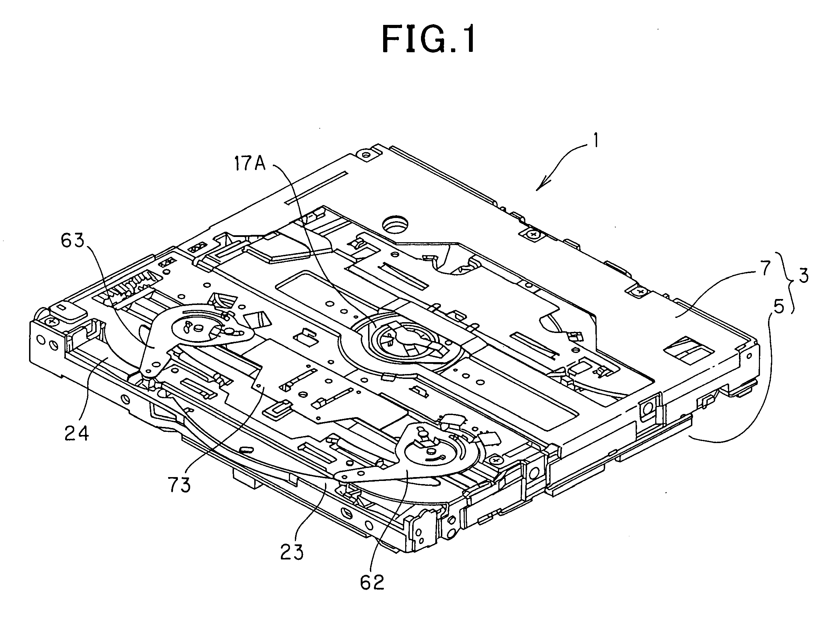

Fig. 1 is a perspective view showing the outlook of a disc player according to the present invention. Recording medium discs having different sizes of 8cm in diameter, 12cm in diameter, etc. such as CD, DVD, etc. are pulled into the disc player, and information recorded in these discs is reproduced. 1 represents main body, and the main body 1 is equipped with a chassis 3 of sheet metal. The chassis 3 has a lower chassis 5 and an upper chassis 7, and a loading mechanism for loading a disc, a clamper mechanism for clamping the disc, a drive mechanism for driving the disc, etc. are provided in the chassis 3.

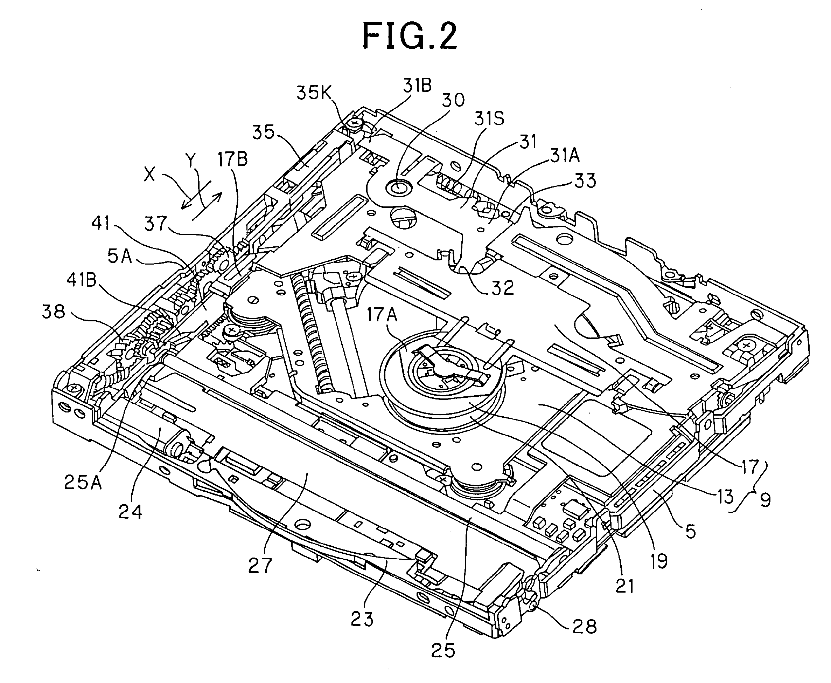

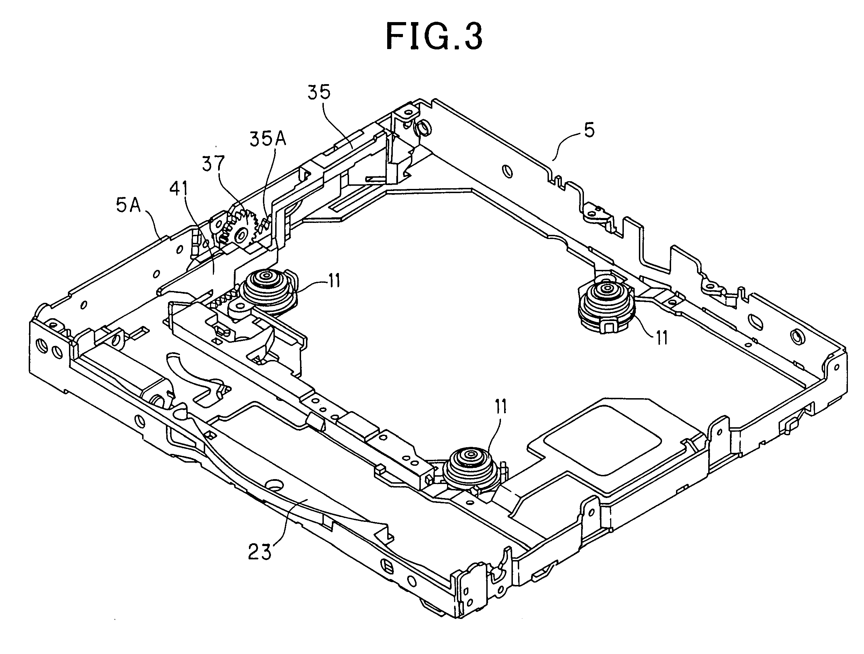

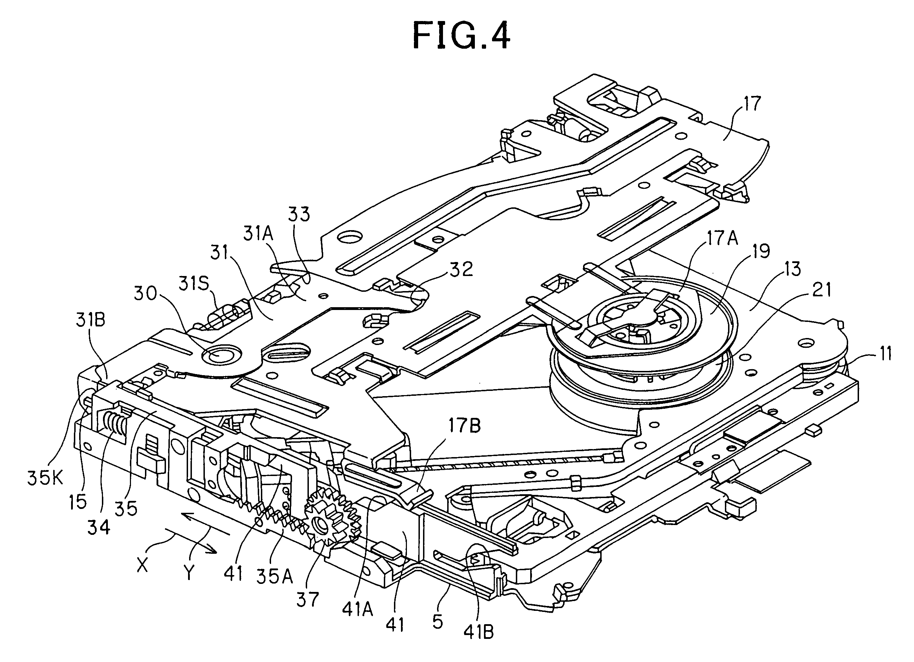

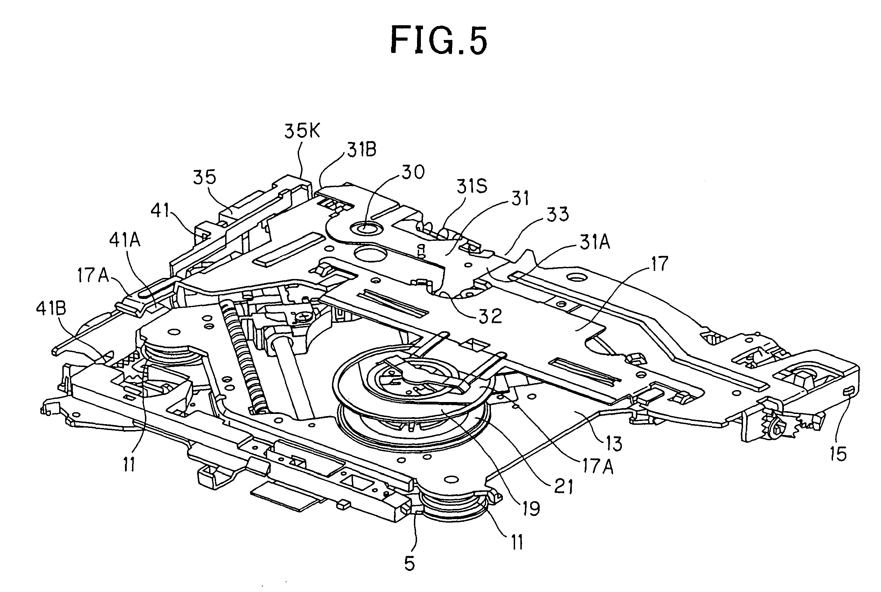

Fig. 2 is a perspective view showing a state that the upper chassis 7 is removed, Fig. 3 is a perspective view showing of the lower chassis 5, Fig. 4 is a left-side perspective view showing a state that a drive unit 9 is attached to the lower chassis 5, and Fig. 5 is a right-side perspective view showing a state that the drive unit 9 is attached to the lower chassis 5.

As shown in Fig. 3, the lower chassis 5 is designed in a frame-shape, and three antivibration structures 11 each having a damper and a spring are secured to the lower chassis 5. As shown in Fig. 2, the drive unit 9 which a clamper mechanism and a drive mechanism are integrated is mounted on the antivibration structures 11 and supported while floated. As shown in Figs. 4 and 5, the drive unit 9 comprises a base plate 13, and a swing plate 17 which is joined to both the sides of the rear end portion of the base plate 13 through a hinge 15 and urged by a spring so as to close the tip end 17A. A rotational plate 19 is mounted at the tip 17A of the swing plate 17, and a magnet-contained turntable 21 facing the rotational plate 19 is supported by the base plate 13. As described later, when a disc is inserted and the swing plate 17 is closed, the disc is pinched by the rotational plate 19 of the tip 17A and the turntable 21 so as to be rotatable.

As shown in Fig. 1, a laterally elongated disc insertion port 23 is formed at the front side of the main body 1, and a loading roller 25 which is driven by a motor 24 at the front portion of the lower chassis 5 is provided to the back side of the insertion port as shown in Fig. 2.
When the disc is detected, this loading roller 25 is driven by the motor 24 to pull the disc concerned into the main body 1. This loading roller 25 is supported by a roller support plate 27. The base portion of the roller support plate 27 is joined to the lower chassis 5 by a hinge pin 28. Accordingly, the loading roller 25 is displaced in height position by the swinging motion of the roller support plate 27.

A trigger plate 31 is freely swingably supported at the left rear portion of the upper surface of the drive unit 9 through a support pin 30. The trigger plate 31 is urged in a counterclockwise direction by a spring 31S, and two pawl portions 32 and 33 which are bent to the inside of the drive unit 9 are integrally formed at one end 31a of the trigger plate 31. An 8-cm disc which is pulled in can abut against one pawl portion 32, and a 12-cm disc which is pulled in can abut against the other pawl potion. The other end 31B of the trigger plate 31 extends to the outside of the drive unit 9, and is bent downwardly along the outer wall of the drive unit 9. The other end 31B abuts against the rear surface 35K of a trigger 35 disposed on the lower chassis 5. When a disc is pulled into the main body 1 and abuts against any pawl portion 32, 33 and the trigger plate 31 is counterclockwise turned, the trigger plate 31 the trigger plate 31 makes the trigger 35 move forwardly (in the direction of an arrow X). This trigger 35 is normally urged to the other end 31B side (in the direction of an arrow Y) by a spring (not shown) by a spring 34 as shown in Fig. 4.

A part of the trigger 35 extends to the front side of the bottom portion of the lower chassis 5, and a trigger rack gear 35A is integrally formed on the upper surface of this extension portion. A final gear 37 (see Fig. 3) which is mounted on the side plate 5A of the lower chassis 5 is disposed at the front side of the trigger rack gear 35A. The final gear 37 is normally mounted at such a position that it is not engaged with the trigger rack gear 35A, and it is engaged with the trigger rack gear 35A only when the trigger plate 31 is turned and thus the trigger 35 moves forwardly. As shown in Fig. 2, the final gear 37 is jointed to the motor 24 at the front potion of the lower chassis 5 through a gear train 38 comprising plural gears. If the trigger rack gear 35A and the final gear 37 are temporarily engaged with each other at the driving time of the motor 24, the trigger 35 moves forwardly by the driving force of the final gear 37 and the motor 24.

As shown in Fig. 4, a trigger cam 41 is integrally joined to the trigger 35. The trigger cam 41 extends inside the gear train 38 in parallel to the gear train 38, and a cam face 41A whose front portion is gradually stepwise higher is formed on the upper surface of the middle portion of the trigger cam 41. An upwardly-climbing stepwise slope groove 41B which guides the driving shaft 25A (see Fig. 2) of the loading roller 25 is formed at the tip portion of the trigger cam 41. A part 17B of the swing plate 17 of the drive unit 9 abuts against the cam face 41A.
After the trigger 35 engages with the final gear 37 and moves to the stroke end, the trigger cam 41 is pushed out, the rack of the trigger cam 41 engages with the final gear 37 and the trigger cam 41 moves forwardly (in the direction of the arrow X).

When the trigger cam 41 moves forwardly (in the direction of the arrow X), the cam face 41A with which the part 17B concerned is in contact is gradually lowered, and the swing plate 17 is swung in the closing direction by the spring force. When the trigger cam 41 further moves forwardly and thus moves to the forward movement limit position, the part 17B is completely separated from the cam face 41A, and clamping of the disc by the rotational plate 19 of the tip of the swing plate 17 and the turntable 21 is completed. At the same time, by the release of the fitting between the part 17B of the swing plate 17 and the cam face 41A, the drive unit 9 is completely floated and supported through the three antivibration structures 11. At the same time, the driving shaft 25A of the loading roller 25 moves to a low position along the slope groove 41B, and the loading roller 25 is displaced to a lower position by the swinging of the roller support plate 27, whereby the loading roller 25 is separated from the lower surface of the disc under clamping. Under this state, the turntable 21 is rotated to reproduce the disc.

When the motor 24 is reversely rotated, the trigger 35 and the trigger cam 41 move backwardly (in the direction of the Y arrow) through the gear train 38, the final gear 37 and the trigger rack gear 35A. In connection with this movement, the cam face 41A with which the part 17B concerned is in contact is gradually higher, and the swing plate 17 is pushed up against the spring force and swung in the opening direction. Furthermore, when the trigger 35 and the trigger cam 41 further backwardly move and the trigger cam 41 moves to the backward-movement limit position , the part 17B runs upon the highest position of the cam face 41A, and a disc inserting gap is formed between the rotational plate 19 of the tip of the swing plate 17 and the turntable 21.

At the same time, the driving shaft 25A of the loading roller 25 gradually moves to a higher position along the slope groove 41B, and at the backward-movement limit position, the loading roller 25 is displaced to a high position until it comes into contact with the lower surface of the disc by the swing motion of the roller support plate 27. Then, the disc is ejected by the loading roller 25.
After the disc is ejected, the display player is set to a loading standby state. Under the eject or loading standby state, the drive unit 9 is locked to the lower chassis 5 by a mechanism (not shown).

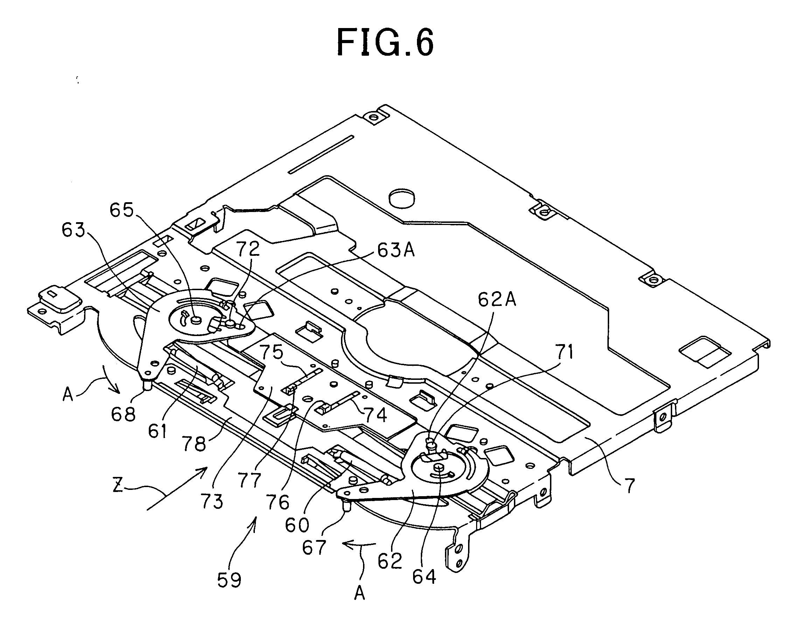

In this construction, as shown in Fig. 1, the pair of gate members which are brought into contact with the outer peripheral portion of the inserted disc and evacuated in the side direction of the insertion port 23 are provided to the disc insertion port 23. The pair of gate members 59 have a pair of turn plates 62, 63 which are disposed so as to be allocated to both the sides substantially from the center portion with respect to the insertion port 23, and these turn plates 62, 63 are joined to the outer surface of the front portion of the upper chassis 7 by pins (support members) 64, 65, respectively a shown in Fig. 6. The turn plates 62, 63 are urged in the closing direction (the direction of an arrow A) by springs 60, 61, and a pair of gate pins 67, 68 which face the insertion port 23 are secured to the turn plates 62, 63.

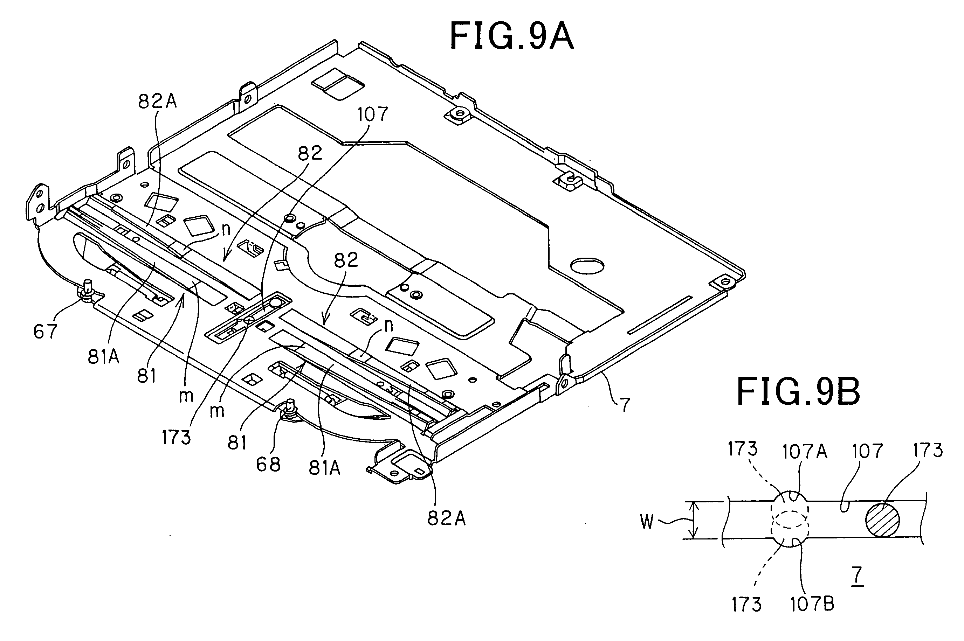

Slide holes 62A, 63A are formed in the base portions of the turn plates 62, 63, and pins 71, 72 which are fitted in the slide holes 62A, 63A are secured to the joint plate 73. The base portions of the turn plates 62, 63 are joined to each other through the joint plate 73. A pin 173 is fixed to the joint plate 73, and as shown in Fig. 9, the joint pin 173 is engagedly fitted in an elongated hole 107 so as to face the lower surface of the upper chassis 7. Arcuate grooves 107A, 107B are formed at both the hole walls in the middle of the elongated hole 107 so as to be larger in diameter than the width W of the elongated hole 107. As shown in Fig. 6, a pair of guide holes 74, 75 extending in the disc insertion direction (the direction of an arrow Z) are formed in the joint plate 73, and guide portions 76, 76 are formed by cutting and erecting a part of the upper chassis 7 and then bending the erected part in the horizontal direction. The erected slender portions are fitted in the guide holes 74, 75. 78 represents a plate secured to the upper chassis 7, and this plate 78 functions as a stopper for the closing direction of the turn plates 62, 63.

When the disc is inserted into the insertion port 23, the disc pushes out the gate pins 67, 68 in the side direction. For example, when a large disc 100 of 12cm in diameter is inserted, the outer peripheral portion 100A of the disc 100 pushes out the pair of gate pins 67, 68 in the side direction of the insertion port 23, and the turn plates 62, 63 are turned in the opening direction (the direction of the arrow B) as shown in Fig. 9. In connection with this swinging motion, the pins 71, 72 move in the slide holes 62A, 63A, whereby the joint plate 73 is reciprocated in the disc insertion direction (the direction of the arrow Z) along the guide portions 76, 77 interlockingly with the swing motion of the turn plates 62, 63.

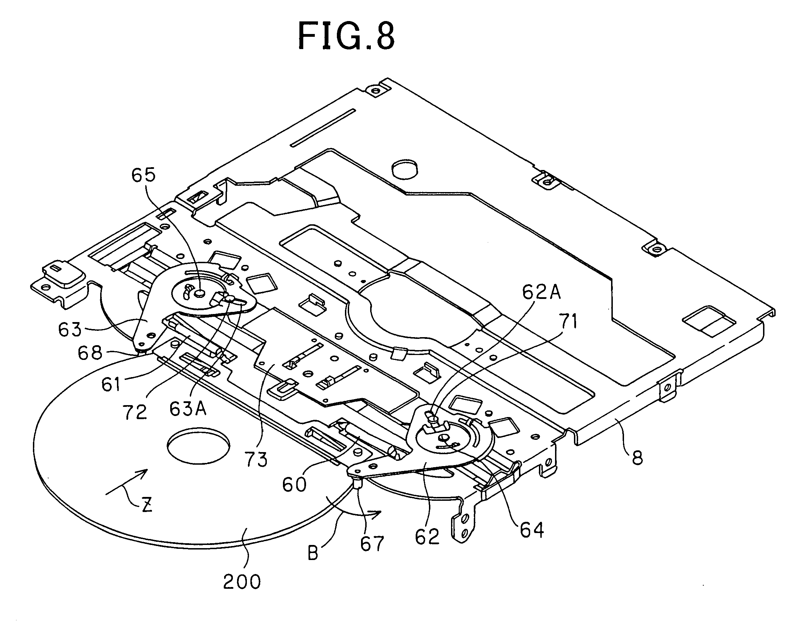

Fig. 8 is a perspective view showing insertion of a small disc of 8cm in diameter. In this case, the disc diameter is smaller than the width of the insertion port 23, and thus there is a risk that the disc is inserted while displaced to one end of the insertion port 23. For example, when the disc 200 is inserted while displaced to the gate pin 67 side, the disc pushes out only the pine 67 while little pushes out the other gate pin 68. In this case, only the turn plate 62 at the gate pin 67 side is turned in the opening direction (the direction of the arrow B).

In this construction, when the other turn plate 63 is not opened and only one turn plate 62 is opened, the joint plate 73 is not turned at the pin 72 side thereof, and the joint plate 73 is turned only at the pin 73 side thereof. In this case, the joint plate 73 is inclined.

As shown in Fig. 9B, when the joint plate 73 is inclined, the pin 173 moving in the elongated hole 107 is fitted into one arcuate groove 107A or 107B at the inclined side in the middle of the elongated hole 107 , and thus the joint plate 73 does not further move in the insertion direction (the direction of the arrow Z) of the disc 200. Accordingly, the turn plates 62, 63 are prevented from being further turned, and thus the insertion of the disc concerned is prevented. The same is satisfied in the case where the disc 200 is inserted while displaced to the other gate pin 68 side. The pin 173 and the arcuate grooves 107A, 107B constitute lock means.

That is, in this construction, when the disc 200 is inserted while displaced to an end of the insertion port 23, the pin 173 moving in the elongated hole 107 is fitted to one of the arcuate grooves 107A, 107B which is located at the inclined side in the middle of the elongated hole 107, and thus the joint plate cannot further move in the front-and-rear direction, so that the joint plate 73 is locked. According to this operation, the disc which is displaced to one end of the insertion port 23 is prohibited from being inserted. Accordingly, a mechanism for guiding to the center inside the main body a disc which is pulled in while displaced to one side. Accordingly, the apparatus can be more miniaturized and particularly the dimension in the thickness of the apparatus can be reduced.

Fig. 9 is a perspective view of the upper chassis 7 when the upper chassis 7 is viewed from the back side. Guide bars (guide mechanisms) 81, 82 which project to the lower side (at the side confronting the loading roller 25) when the upper chassis 7 is assembled, guide the disc inserted into the insertion pot 23 downwardly (or upwardly) and extend so as to form a double line are provided on the inner surface of the upper chassis 7.

These guide bars 81, 82 extend in parallel to each other in the side direction of the insertion port 23, and each of the guide bars 81, 82 is gradually increased in height to the end of the insertion port 23. The front-side guide bar 81 is designed so that the height of the projection portion 81A thereof is gradually increased in height from a position nm near to the center, and the back-side guide bar 82 is designed so that the height of the projection portion 82A thereof is gradually increased from a position n which is more displaced to the end than the position m. The loading roller 25 confronts the pair of guide bars 81, 82, and the disc is loaded while pinched by the roller 25 and the guide bars 81, 82.

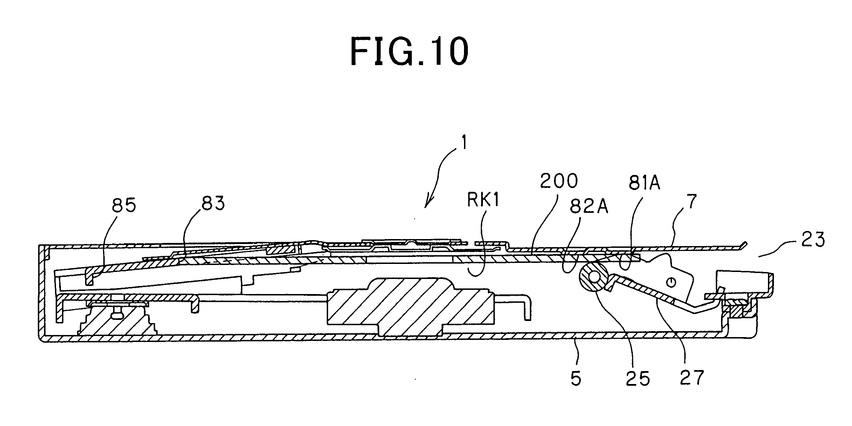

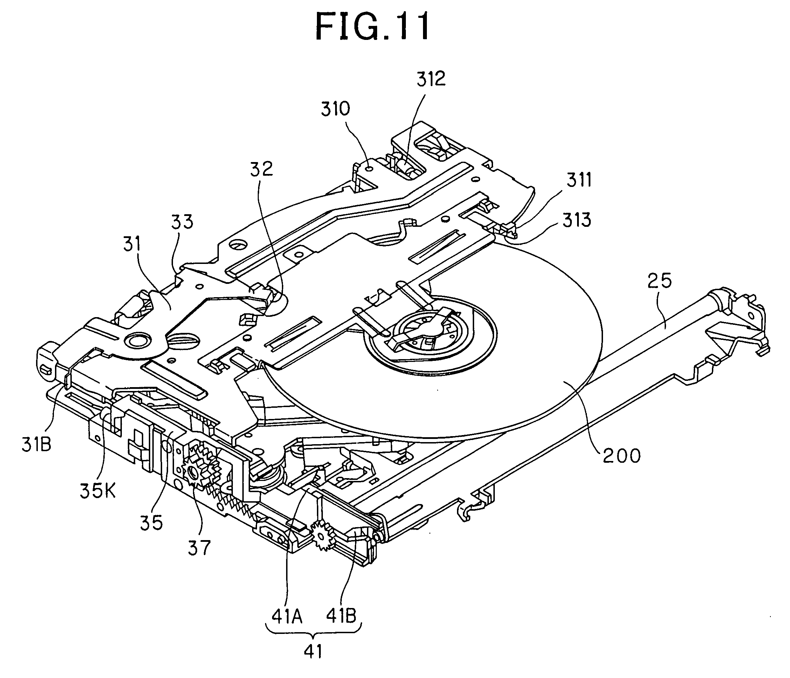

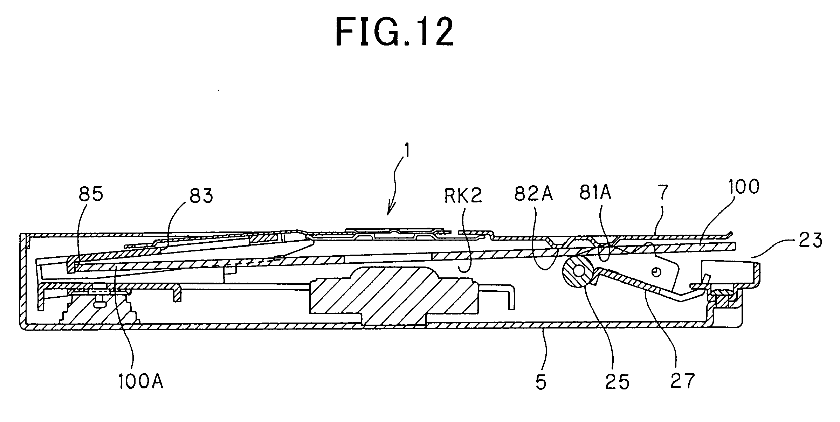

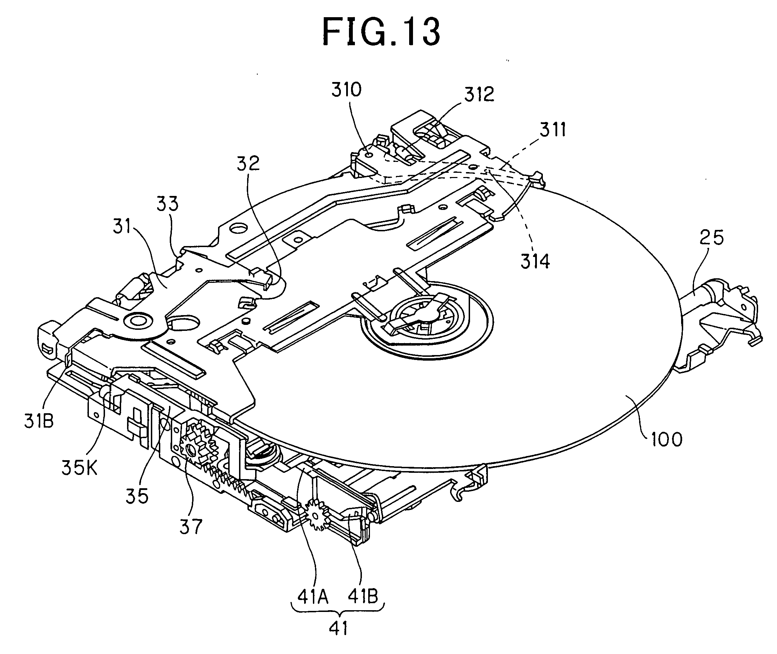

Fig. 10 is a cross-sectional view when the disc 200 of 8cm in diameter is inserted, Fig. 11 is a perspective view of Fig. 10, Fig. 12 is a cross-sectional view when the disc 100 of 12cm in diameter is inserted, and Fig. 13 is a perspective view of Fig. 14.

As shown in Fig. 10, when the disc 200 of 8cm in diameter is inserted, the disc 200 inserted from the insertion port 23 is pinched between the loading roller 25 and the lower projecting portions 81A, 82A of the guide bars 81, 82, and loaded to the back side of the main body 1 along a first loading passage RK located at a high place in the main body 1. A first disc contact portion 83 is located at the terminal portion of the first loading passage RK1, and the disc 200 is brought into contact with the first disc contact portion 83 and stopped. In this stage, the disc 200 pushes and moves one pawl portion 32 of the trigger plate 31 as shown in Fig. 11, and the clamp operation of the disc 200 is executed as described above with this push and movement as a trigger.

As shown in 12, when the disc 100 of 12cm in diameter is inserted, the disc 100 inserted from the insertion port 23 is pinched between the loading roller 25 and the higher projecting portions 81A, 82A of the guide bars 81, 82, and loaded to the back side of the main body 1 along a second loading passage RK2 located at a low place in the main body 1. As shown in Fig. 13, a guide bar 331 is formed so as to come into contact with the outer periphery (the right back side of Fig. 13) of the disc 100 of 12cm in diameter. The guide bar 331 is mounted so as to be swingable around a pin 310, and is urged clockwise around the pin 310 through a spring 312.

As shown in Fig. 11, a backwardly-declined tapered face 313 is formed on the lower surface of the free end of the guide bar 331. When the disc 100 of 12cm in diameter is inserted, the tip 100A of the disc 100 is oriented to the lower side along the tapered face 313, and crosses the pawl portion 32 of the trigger plate 31. When the disc 100 further progresses to the back side, the guide bar 331 is counterclockwise turned around the pin 310, and stable loading is executed while the outer periphery of the disc 100 is guided by the guide bar 331.

A second disc contact portion 84 is located at the terminal portion of a second loading passage RK2. The disc 100 comes into contact with the second disc contact portion 84 and stops there. In this stage, the disc 100 pushes and moves the pawl portion 33 of the trigger plate 31 as shown in Fig. 13, and the clamp operation of the disc 100 is executed as described above with this push and movement as a trigger. When the clamping is completed, the projection 314 of the lower surface of the guide bar 331 is fitted into a recess (not shown) of the swing plate 17 side, and the guide bar 331 is separated from the outer periphery of the disc 100, and fixed. Accordingly, the guide bar 331 is prevented from coming into contact with the disc 100 at the play time.

The first disc contact portion 83 and the second is contact portion 84 are formed by both the edge portions of one plate member 85, and one edge portion (the first disc contact portion 83) of the plate member 85 faces the terminal portion of the first loading passage RK1, and the other bent edge portion (second disc contact portion 84) of the plate member 85 faces the terminal portion of the second loading passage RK2. The first disc contact portion 83 and the second disc contact portion 84 are formed by one plate member 85, so that the construction is simple and the apparatus can be designed to be thin.

In this embodiment, the different loading passages RK1 and RK2 are provided so as to be allocated to the upper and lower sides inside the main body. Therefore, a complicated mechanism for holding discs different in diameter is not required to be provided at the terminal portions of the loading passages, and thus the thin design of the apparatus can be implemented. This construction can be applied to a disc player in which discs different in material or the like are loaded, and in this case, the discs are not scratched or the like by making some improvements in accordance with the shape, the material or the like of the loading passage and the guide bars 81, 82.

## Claims

1. A disc player for loading a disc inserted in an insertion port into a main body to reproduce the disc, **characterized in that** a guide mechanism for guiding the disc inserted in the insertion port upwardly or downwardly inside the main body is provided, and the upwardly or downwardly guided disc can be loaded along different loading passages inside the main body.

2. The disc player according to claim 1, wherein a disc contact portion is individually provided to each terminal portion of the loading passages.

3. The disc player according to claim 2, wherein the disc contact portion is formed of a plate member, and both the edge portions of the plate member may face each terminal portion of the loading passages.

4. The disc player according to claim 1, wherein the guide mechanism is equipped with a guide bar that extends in the lateral direction of the insertion port and is varied in height in the lateral direction.

5. The disc player according to claim 4, wherein the height of the guide bar is gradually increased toward the end of the insertion port.

6. The disc player according to claim 4, wherein the guide bar is formed integrally with the inner surface of a chassis of the main body.

7. The disc player according to claim 4, wherein the disc is loaded while pinched by a loading roller and the guide bar.

8. The disc player according to claim 1, wherein discs different in diameter are freely insertable into the insert port of the main body, and a guide member that can come into contact with the outer periphery of an inserted large-diameter disc is provided.

9. The disc player according to claim 8, wherein the guide member stably loads the disc while guiding the outer periphery of the disc.

10. The disc player according to claim 9, wherein a backwardly declined taper face is formed on the lower surface of a free end of the guide member, when a large-diameter disc is inserted, the tip of the disc is downwardly oriented along the tapered face, intersects to one pawl portion of a trigger plate, and when the disc reaches the terminal portion of the loading passage, the disc comes into contact with the disc contact portion, pushes the other pawl portion of the trigger plate and executes a clamp operation of the disc concerned with the pushing of the other pawl portion as a trigger.

## Amended claims

### Amended claims under Art. 19.1 PCT

**1.** (Amended) A disc player that has a guide mechanism for guiding a disc inserted in an insertion port upwardly or downwardly inside a main body and loads the upwardly or downwardly guided disc along different loading passages inside the main body in cooperation of the guide mechanism and a loading roller to reproduce the disc, **characterized in that** the guide mechanism has guide bars that are arranged in parallel at front and rear sides so as to extend in a lateral direction of the insertion port and varied in height in the lateral direction, in cooperation of the guide bars, the tip of the disc is guided downwardly when a large-diameter disc is inserted while the tip of the disc is guided upwardly when a small-diameter disc is inserted, and a disc contact portion is disposed at each terminal portion of the loading passages.

**2.** (Deleted)

**3.** (Amended) The disc player according to claim 1, wherein the disc contact portion is formed of a plate member, and both the edge portions of the plate member face each terminal portion of the loading passages.

**4.** (Deleted)

**5.** (Deleted)

**6.** (Amended) The disc player according to claim 1, wherein the guide bar is formed integrally with the inner surface of a chassis of the main body.

**7.** (Deleted)

**8.** The disc player according to claim 8,
The disc player according to claim 1, wherein the insertion port of the main body is provided with a guide member in which discs different in diameter are freely insertable and which comes into contact with the outer periphery of an inserted large-diameter disc.
The disc player according to claim 1, wherein the insertion port

**9.** The disc player according to claim 8, wherein the guide member stably loads the disc while guiding the outer periphery of the disc.

**10.** The disc player according to claim 9, wherein a backwardly declined taper face is formed on the lower surface of a free end of the guide member, when a large-diameter disc is inserted, the tip of the disc is downwardly oriented along the tapered face, intersects to one pawl portion of a trigger plate, and when the disc reaches the terminal portion of the loading passage, the disc comes into contact with the disc contact portion, pushes the other pawl portion of the trigger plate and executes a clamp operation of the disc concerned with the pushing of the other pawl portion as a trigger.

Statement under Art. 19.1 PCT
" in cooperation of the guide bars, the tip of the disc is guided downwardly when a large-diameter disc is inserted while the tip of the disc is guided upwardly when a small-diameter disc is inserted" is incorporated into claim 1 of claims.

The provision of the above construction is never disclosed by any cited document.
